# FASCICULE DE BREVET EUROPEEN

(11) **EP 1 269 279 B1**
(45) Date de publication et mention de la délivrance du brevet: **04.08.2004**
(21) Numéro de dépôt: 01919598.1
(22) Date de dépôt: 29.03.2001
(51) Int. Cl.: G05B 19/418, B05B 12/00, B05B 13/04

(54) **DISPOSITIF DE CONTROLE D'UNE INSTALLATION DE TRAITEMENT DE SURFACE, NOTAMMENT POUR L'INDUSTRIE AUTOMOBILE**
STEUERUNGSVORRICHTUNG EINER OBERFLÄCHEN-BEHANDLUNGSANLAGE, INSBESONDERE FÜR DIE AUTOMOBILINDUSTRIE
DEVICE FOR CONTROLLING A SURFACE TREATMENT INSTALLATION, IN PARTICULAR FOR THE AUTOMOTIVE INDUSTRY

(30) Priorité: 30.03.2000 FR 0004074
(43) Date de publication de la demande: 02.01.2003
(73) Titulaire: Eisenmann France SARL, F-78400 Chatou (FR)
(72) Inventeur: CHARPIN, Lionel, F-38240 Meylan (FR)
(74) Mandataire: Bratel, Gérard
(86) Numéro de dépôt international: PCT/FR2001/000956
(87) Numéro de publication internationale: WO 2001/075540

(56) Documents cités:
- WO-A-97/26587
- US-A- 4 614 300
- US-A- 5 255 197
- US-A- 5 347 463
- US-A- 5 656 089
- US-A- 5 689 415
- US-A- 5 850 338
- J. MARCUSE ET AL: "SERVERS IN SCADA APPLICATIONS" IEEE TRANSACTIONS ON INDUSTRY APPLICATIONS, vol. 33, no. 5, septembre 1997 (1997-09) - octobre 1997 (1997-10), pages 1295-1299, XP002158199
- SUH S -H ET AL: "PROTOTYPE INTEGRATED ROBOTIC PAINTING SYSTEM: SOFTWARE AND HARDWARE DEVELOPMENT" JOURNAL OF MANUFACTURING SYSTEMS,US,SOCIETY OF MANUFACTURING ENGINEERS, DEARBORN, MI, vol. 12, no. 6, 1993, pages 463-473, XP000448773 ISSN: 0278-6125

## Description

La présente invention concerne un dispositif de contrôle d'une installation de traitement de surface, notamment pour l'industrie automobile.

Dans l'industrie automobile, une installation de traitement de surface, destinée par exemple à peindre des carrosseries portées et déplacées par un convoyeur, comporte par exemple un ensemble de six machines destinées au revêtement des parois latérales des carrosseries et une machine appelée aussi "machine de toit" destinée au revêtement des surfaces se trouvant sensiblement à l'horizontale. Chacune des six machines dites latérales est équipée d'un pulvérisateur, tandis que la machine de toit comporte trois pulvérisateurs distincts. Une telle installation fonctionne en synchronisation avec le convoyeur assurant le transport des carrosseries. Elle comporte en outre une cabine munie d'une ventilation verticale et d'un système de récupération du produit de revêtement excédentaire.

Le dispositif de commande et de contrôle d'une telle installation comporte un système de contrôle et de commande commun à l'ensemble de l'installation et des systèmes de contrôle et de commande pour chacune des machines et autres éléments de l'installation.

Le système de contrôle et de commande commun à l'ensemble des pulvérisateurs permet notamment d'identifier le type d'une carrosserie entrant dans la zone de l'installation et d'effectuer le suivi de cette carrosserie jusqu'à sa sortie de la zone. On peut remarquer que plusieurs carrosseries peuvent se trouver dans la même zone et peuvent être peintes en même temps. Ce système permet également d'assurer la sécurité de l'installation au travers de différents capteurs qui l'équipent, la coordination du fonctionnement des pulvérisateurs et les interfaces avec la cabine, le convoyeur, etc....

Les systèmes de contrôle et de commande pour chacune des machines permettent notamment d'assurer la cinématique des mouvements de la machine correspondante et le contrôle des paramètres de pulvérisation du (ou des) pulvérisateurt(s) qu'elle supporte. La cinématique des mouvements et les paramètres de pulvérisation sont à chaque fois spécifiques à la carrosserie en cours de traitement.

A chaque machine ou autre élément de l'installation peut par exemple être associé alors un automate programmable industriel. Chacun de ces automates est contrôlé par un autre automate programmable industriel contrôlant et commandant l'ensemble de la station. Cet automate "maître" est lui-même connecté à un superviseur qui peut se présenter sous la forme d'un ordinateur de type ordinateur personnel. Si plusieurs installations sont présentes dans une même usine, ces systèmes de commande et de contrôle peuvent être organisés en réseau et un ordinateur commun relié à ce réseau sert alors à la programmation des divers paramètres pour chacune des installations.

L'automate programmable "maître" permet de récupérer les informations des différents capteurs et connaît par un moyen approprié le type de carrosserie qui arrive dans la zone de l'installation à laquelle il est associé. Cet automate dispose en mémoire, pour chacun des types de carrosserie, une table appelée "table de pistolage" qui contient tous les ordres de positionnement de chacune des machines et autres éléments et le réglage de chacun des pulvérisateurs en fonction de l'avance de la carrosserie sur le convoyeur. A des intervalles réguliers, chaque intervalle correspondant par exemple au déplacement de la carrosserie sur le convoyeur d'une distance prédéterminée, les machines et pulvérisateurs nécessitent de nouveaux réglages puisque la carrosserie a progressé au sein de l'installation. Après chaque intervalle de temps, les ordres correspondants sont donc envoyés à chacun des automates programmables industriels correspondant à une machine ou un autre élément. Ces automates sont aussi appelés automates "esclaves" par opposition à l'automate "maître".

Les tables de pistolage pour chacun des types de carrosserie sont programmées sur l'ordinateur mentionné plus haut servant à la programmation. Ces tables consistent, pour une carrosserie ayant une forme donnée, à entrer pour différentes positions de la carrosserie dans l'installation les différents ordres correspondant par exemple aux positions des divers axes de chaque machine, au débit de produit de traitement pour chacun des pulvérisateurs, à la tension électrique appliquée, etc. Une fois les tables de pistolage programmées, elles sont chargées dans l'automate "maître" par l'intermédiaire de disquettes ou similaires.

Le superviseur permet quant à lui de suivre le déroulement du processus pendant sa progression et permet également l'envoi d'ordres particuliers à une machine, notamment en phase d'ajustement ou de maintenance. Ce superviseur dispose d'un écran pour permettre la visualisation du processus et d'un clavier pour la saisie d'ordres et/ou de modifications.

Le temps nécessaire pour mettre au point les tables de pistolage pour chacune des carrosseries est très important. Il faut en effet entrer un grand nombre de points afin que l'enveloppe cinématique de chacune des machines soit proche de la forme de la carrosserie. Ceci est vrai pour chacune des carrosseries et on compte généralement une moyenne de vingt carrosseries pour chaque usine de production. De ce fait, on limite le nombre de points des tables de pistolage à environ une centaine selon la complexité de la forme extérieure de la carrosserie. De plus, compte tenu des différents types de peinture, des ajustements des réglages des pulvérisateurs sont nécessaires. De ce fait, le nombre de tables est encore multiplié pour chacune des teintes et l'on obtient au total des tables qui comportent un nombre de points de programmation de l'ordre d'une dizaine de milliers.

De plus, il est nécessaire de tester ces tables en grandeur réelle, c'est-à-dire sur une carrosserie. Cette phase d'essai et de réglage peut durer de quelques jours à plusieurs semaines. Elle coûte en temps et également en exploitation dans la mesure où elle consomme du produit de revêtement et de nettoyage et dans la mesure où elle salit l'installation et demande donc de l'entretien. En outre, il est fréquent dans les usines automobiles de remplacer de vieilles installations par de nouvelles durant la période estivale d'arrêt de production. On dispose alors de quatre semaines pendant lesquelles il faut démonter l'ancienne installation, modifier les infrastructures, assembler la nouvelle installation, procéder à la mise en service puis au test à vide et enfin au réglage d'application afin d'être prêt à démarrer en pleine production avec le minimum de rebut. La phase d'essai et de réglage représente la partie la plus longue et la plus incertaine de la mise en oeuvre d'une nouvelle installation.

Cette phase peut être raccourcie dans la mesure où il existe maintenant des moyens permettant de simuler les tables de pistolage avant la phase d'essai sur le site.

En ce qui concerne l'état de la technique, l'article de J. MARCUSE et al. "Servers in SCADA Applications", dans IEEE Translations on Industries Applications, Vol. 33, N° 5, September/October 1997, décrit plusieurs versions d'un système informatique décentralisé, et réparti à plusieurs niveaux d'une entreprise, en donnant pour exemple d'application une ligne de production de barres d'acier, du genre laminoir. Les "architectures" résultant de ce document restent toutefois éloignées de celle de la présente invention, notamment en ce qui concerne le serveur et ses connexions.

Le document US-A-5850338 traite d'un système de contrôle numérique utilisant un ordinateur, et effectuant une interpolation entre deux axes "X" et "Y".

Le document US-A-5347463 concerne un système de gestion d'une ligne de production, par exemple d'une ligne de peinture de carrosseries d'automobiles. Ce document s'intéresse au transfert et à l'identification des objets tels que carrosseries à traiter, et non pas au contrôle de machines de peinture.

Le document WO-A-9726587 prévoit des postes de fabrication, qui incluent des automates programmables, et qui sont reliés entre eux par le réseau INTERNET. Ce document ne vise pas particulièrement les installations de traitement de surface.

L'article de SUH S-H et al. "Prototyp Integrated Robotic Painting System : Software and Hardware Development", dans Journal of Manufacturing Systems -12 (93) - N° 6, Dearbom, MI, US concerne le contrôle des mouvements pour décrire des surfaces. Ce document détaille la modélisation des surfaces à traiter, mais il ne décrit pas une "architecture" informatique comparable à l'objet de la présente invention.

Enfin, le document US-A-4614300 décrit une installation automatisée de peinture, pilotée par un système informatique dans lequel sont stockés des programmes de pulvérisation. Toutefois, ce document ne prévoit ni serveur, ni réseaux pour la gestion d'une pluralité de machines. Par ailleurs, ce dernier document concerne une installation de laboratoire, pour l'essai de peinture sur des plaques planes fixes, et non pas une ligne de production industrielle, conçue pour peindre des objets complexes tridimensionnels et variés, et en mouvement, tels que le sont les carrosseries de véhicules automobiles avançant sur un convoyeur.

Ainsi, dans l'ensemble, l'état de la technique, et en particulier les documents se rapportant déjà au domaine des installations de peinture notamment de véhicules, ne résolvent pas encore les problèmes précédemment exposés, et ne suggèrent pas l'objet de l'invention.

La présente invention a ainsi pour but de fournir un dispositif de commande et de contrôle permettant de réduire encore les coûts des phases d'essai en diminuant le temps nécessaire à ces phases et/ou les coûts d'exploitation liés à celles-ci. Ce système permettra avantageusement aussi d'apporter plus facilement des modifications lorsqu'un nouveau type de carrosserie, ou de pièce à traiter, apparaît ou lorsque des caractéristiques du produit pulvérisé changent.

A cet effet, le système proposé par l'invention est un système de commande et de contrôle pour une installation de traitement de surface comportant au moins une machine multi-axes, chaque axe étant équipé de moyens moteurs, munie d'équipements tels que par exemple un pulvérisateur ainsi que de capteurs et actionneurs correspondants, ce système présentant :
des moyens permettant de superviser l'installation et comportant au moins un calculateur programmable muni de moyens de visualisation et de moyens permettant l'entrée de données,
au moins un calculateur programmable permettant la gestion des axes des machines et de leurs équipements, et
un serveur, pouvant être commun à plusieurs installations, permettant la programmation de tables de pistolage,
et ce système étant caractérisé par le fait qu'un premier réseau informatique relie le serveur au(x) calculateur(s) programmable(s) pour la gestion des machines ainsi qu'aux moyens permettant de superviser l'installation, et qu'un second réseau informatique relie le(s) calculateur(s) programmable(s) pour la gestion des machines aux capteurs et actionneurs des machines.

Le premier réseau informatique permet notamment le téléchargement de tables de pistolage. La programmation de celles-ci peut alors être effectuée en ligne et permet ainsi de réduire le temps d'immobilisation de l'installation. Le second réseau permet quant à lui d'effectuer des réglages et des mesures nécessaires à différentes boucles de régulation des paramètres de l'installation.

L'invention s'applique à des installations destinées à la pulvérisation de produit de revêtement sur une carrosserie mais elle peut également s'appliquer à des installations de dépoussiérage ou à d'autres installations munies de machines multi-axes.

Avantageusement, le(s) calculateur(s) permettant la gestion des axes de machines intègre(nt) une commande numérique permettant de gérer les axes en interpolation, par exemple en interpolation circulaire. De cette manière, la synchronisation des divers paramètres des équipements et des asservissements cinématiques est facilitée. Dans ce cas, il peut être intéressant de prévoir, pour les moyens moteurs associés aux axes des machines comportant de préférence des variateurs de vitesse, un troisième réseau informatique spécifique reliant ces variateurs au(x) calculateur(s) programmable(s) permettant la gestion des axes des machines. Ce troisième réseau permet de lire la position des machines et de leurs équipements et d'actionner les moteurs en conséquence.

Le système de commande et de contrôle selon l'invention comporte de préférence également des moyens permettant l'identification de la pièce à traiter, réalisant l'interface avec la cabine et le convoyeur et assurant aussi la gestion des sécurités. Ces moyens d'identification, d'interface et de sécurité peuvent se présenter sous la forme d'un ensemble de capteurs et d'actionneurs communs à toutes les machines et relié aux moyens permettant de superviser l'installation.

Le système de commande et de contrôle présente avantageusement un quatrième réseau informatique reliant le calculateur permettant de superviser l'installation au réseau informatique de l'usine. Ce réseau permet la transmission du type de la pièce à traiter. Les capteurs et actionneurs communs sont par exemple sur le même réseau que les capteurs et actionneurs propres à chacune des machines.

Pour gagner du temps lors de la mise en service sur le site, le serveur dispose avantageusement de moyens de simulation permettant de visualiser l'application d'une table de pistolage sur une pièce à traiter.

Afin de permettre d'intervenir à distance pour diagnostiquer des pannes et éventuellement y remédier, le serveur est par exemple équipé d'un modem lui permettant de communiquer avec un ordinateur placé à distance et équipé lui aussi d'un modem. Ce modem permet, à partir de l'ordinateur placé à distance, de diagnostiquer ou d'actionner chacun des capteurs et actionneurs de l'installation.

De toute façon, l'invention sera bien comprise à l'aide de la description qui suit, en référence au dessin schématique annexé, représentant à titre d'exemples plusieurs formes de réalisation d'un tel système de commande et de contrôle.
Figure 1 est une vue schématique d'un système de commande et de contrôle selon l'invention,
Figure 2 montre schématiquement une variante de réalisation du système de la figure 1 pour ce qui concerne une installation,
Figure 3 montre comme la figure 2 une autre variante de réalisation du système de la figure 1, et
Figure 4 montre une quatrième variante de réalisation d'un système de commande et de contrôle selon l'invention.

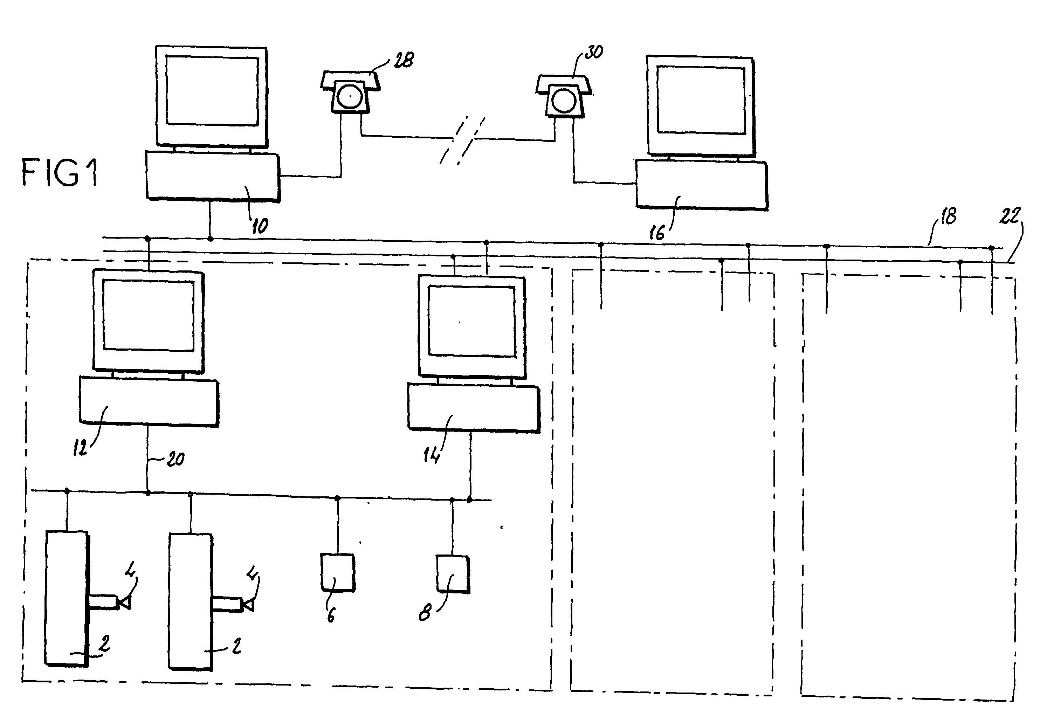

La figure 1 montre une réalisation d'un système de commande et de contrôle pour un ensemble d'installations de traitement de surface. Chaque installation n'est pas représentée en détail au dessin. Les différentes installations sont schématisées par des cadres en traits mixtes. Dans la présente description, on peut considérer qu'il s'agit par exemple d'une installation destinée au revêtement de carrosseries de véhicules automobiles, ces dernières étant portées et déplacées par un convoyeur. L'installation se compose par exemple de deux ensembles de trois machines se trouvant de part et d'autre du convoyeur. Ces six machines sont destinées à peindre les faces latérales sensiblement verticales de la carrosserie avançant avec le convoyeur. Ces machines sont également appelées machines latérales. Chacune de ces machines porte un pulvérisateur automatique de produit de revêtement. Il s'agit d'une machine présentant plusieurs degrés de liberté que l'on peut qualifier de multi-axes. A chaque degré de liberté, ou axe, il correspond un moteur qui agit sur la machine et provoque directement ou indirectement un déplacement du pulvérisateur et/ou modifie son orientation dans l'espace. Pour traiter les surfaces de la carrosserie automobile qui sont sensiblement horizontales, on utilise par exemple une machine appelée machine de toit, qui porte trois pulvérisateurs. La machine de toit présente également plusieurs degrés de liberté et les pulvérisateurs qu'elle porte peuvent se déplacer les uns par rapport aux autres. Toutes ces machines comprennent des capteurs et des actionneurs permettant de réaliser les différents mouvements de la machine et de connaître la position exacte de celle-ci.

Pour limiter les projections de peinture, une cabine est associée à l'installation. La carrosserie à peindre se trouve dans la cabine qui est fermée de manière relativement étanche pendant les opérations de pulvérisation. On trouve à l'intérieur et autour de la cabine un certain nombre d'actionneurs et de capteurs communs pour réaliser le déplacement de diverses pièces et éléments et pour déterminer la position de ceux-ci.

Le système de commande et de contrôle a pour but de gérer tous les éléments composant l'installation de manière à obtenir des carrosseries de véhicules automobiles peintes sans défaut. Il faut pour cela gérer tous les paramètres de pulvérisation des pulvérisateurs et coordonner le mouvement de la carrosserie sur le convoyeur avec le mouvement des pulvérisateurs. En outre, le système de contrôle doit également assurer la sécurité de l'installation.

Sur chacune des figures, ont été représentées schématiquement deux machines 2, sur chacune desquelles est monté un pulvérisateur 4. Chacune de ces machines comporte un ensemble de capteurs et d'actionneurs propres non représentés individuellement. Chaque machine 2 symbolise ainsi l'ensemble des capteurs et actionneurs qui lui sont propres.

La figure 1 montre en outre quatre ordinateurs 10, 12, 14 et 16 comportant chacun une unité centrale et un écran, à chacun desquels peut être relié un clavier pour l'entrée de données. Ces ordinateurs sont par exemple des ordinateurs personnels appelés couramment "PC".

Sur la figure 1, un premier ordinateur 10 sera appelé par la suite serveur. Un second ordinateur 12 sera appelé par la suite calculateur métier. L'ordinateur portant la référence 14 sera quant à lui appelé superviseur, tandis que le quatrième ordinateur 16 sera dénommé par la suite comme ordinateur central.

Le serveur 10 est un ordinateur qui peut être commun à plusieurs installations du type de celles décrites ci-dessus. Il peut gérer un certain nombre d'installations identiques ou bien plusieurs installations toutes différentes les unes des autres. Ce serveur 10 permet de programmer des tables de pistolage dans lesquelles sont prédéfinis la cinématique et les paramètres de fonctionnement des pulvérisateurs.

Le calculateur métier 12 gère les axes des machines 2 ainsi que les pulvérisateurs 4. Il remplit tout d'abord les fonctions d'un automate programmable industriel, en ce sens qu'il fournit aux différents axes des machines 2 et aux pulvérisateurs 4 des instructions correspondant à des positions à atteindre et à des paramètres (débit de peinture, tension électrique, etc...) à régler. De plus, pour optimiser le déplacement des pulvérisateurs 4, le calculateur métier 12 intègre les fonctions d'une commande numérique qui permet de réaliser, à partir des instructions reçues, une interpolation circulaire afin d'obtenir un mouvement des pulvérisateurs 4 qui suit au mieux la forme de la carrosserie à peindre.

Le superviseur 14 permet la supervision de l'installation et forme une interface homme/machine au niveau de l'installation. Il est possible alors à un technicien, grâce à cet ordinateur, de surveiller des paramètres réglés dans l'installation et la position des différents éléments mobiles. Un clavier permet l'introduction de données pour permettre un dialogue entre le technicien utilisateur et l'installation. Le superviseur 14 intègre également les fonctions d'un automate permettant l'identification de la carrosserie à peindre, assurant les interfaces avec la cabine et le convoyeur et gérant les diverses sécurités mises en oeuvre au niveau de l'installation.

Un premier réseau informatique 18 relie le serveur 10 aux calculateurs métiers 12 et aux superviseurs 14. Ce réseau informatique 18 est commun à toutes les installations desservies par le serveur 10. Il permet notamment le téléchargement des tables de pistolage. Il n'est alors plus nécessaire comme c'est le cas généralement pour les installations de l'art antérieur, d'enregistrer les tables de pistolage sur un support informatique (disquette, CD-ROM, ...) pour pouvoir les installer au niveau du calculateur métier. Il est également possible, contrairement aux installations de l'art antérieur, de programmer les tables de pistolage en ligne. De plus, le serveur 10 dispose de moyens de simulation permettant de visualiser l'application d'une table de pistolage sur une carrosserie à traiter. Ceci permet un gain de temps sensible lors de la mise en service de l'installation sur le site.

Un second réseau informatique 20, au niveau d'une installation, relie le calculateur métier 12 aux machines 2. Il permet d'effectuer les réglages et les mesures nécessaires aux différentes boucles de régulation des paramètres prévus au niveau de la programmation du système. Sur ce même réseau se trouvent les capteurs 6 et actionneurs 8 communs à l'installation.

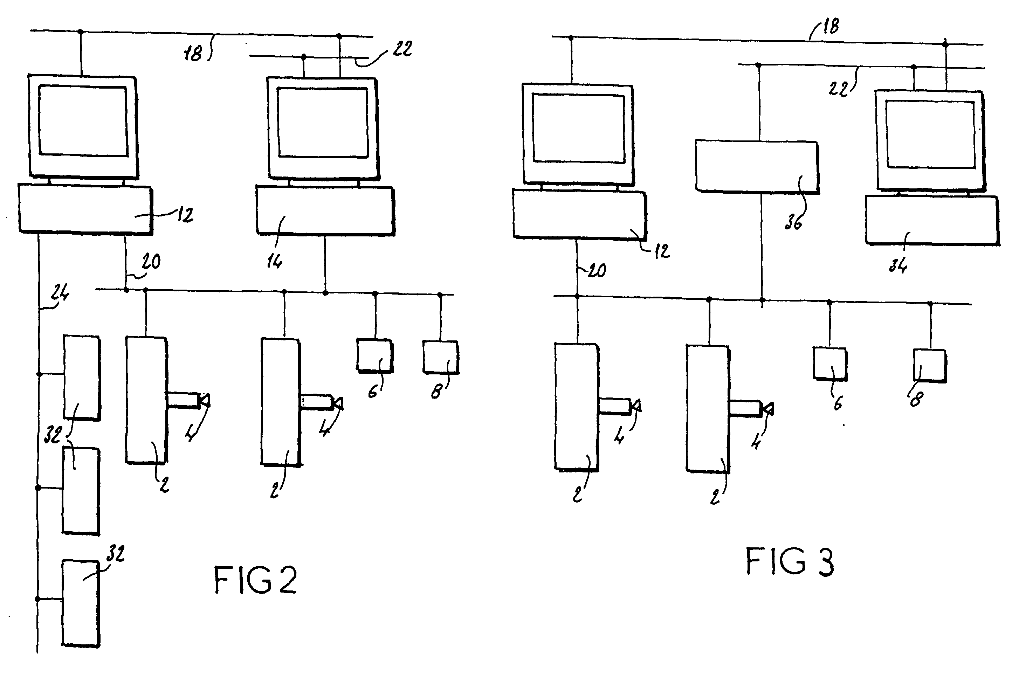

La figure 2 montre une variante de réalisation comportant un troisième réseau 24, réalisé par exemple par des fibres optiques. Sur cette figure, seuls les dispositifs propres à une installation ont été représentés. Chaque machine 2 de cette installation comporte plusieurs variateurs de vitesse 32 pour piloter ses divers moteurs. Trois de ces variateurs 32 ont été représentés sur la figure 2. Le troisième réseau 24 relie le calculateur métier 12 aux machines 2 et plus particulièrement aux variateurs 32 pilotant les moteurs de celles-ci. Ces moteurs sont des moteurs électriques dits numériques, qui donnent à chaque instant des données précises quant à leur vitesse et leur position. Le troisième réseau informatique 24 permet de communiquer ces informations au calculateur métier 12 et ce dernier envoie des instructions aux variateurs 32 pilotant les moteurs des machines 2 en fonction des informations reçues.

Un quatrième réseau informatique 22, présent sur toutes les variantes représentées au dessin, relie le superviseur 14 au réseau informatique de l'utilisateur. L'installation étant intégrée dans une usine comportant un nombre important d'autres installations qui doivent toutes être gérées ensemble pour un bon fonctionnement de l'usine, une liaison est établie avec le système de gestion de l'usine. Cette liaison est raccordée à l'installation au niveau du superviseur 14. Le quatrième réseau transmet à ce dernier notamment le type de la carrosserie à peindre.

En outre, le serveur 10 est équipé d'un modem 28 qui permet de mettre en communication le serveur 10 avec l'ordinateur central 16. Ce dernier est également équipé d'un modem 30. L'ordinateur central est par exemple placé dans les locaux de la société ayant en charge le suivi et la maintenance de l'installation. Grâce à la liaison par modems 28 et 30, il est possible de diagnostiquer à distance une panne puisque le serveur a accès à tous les capteurs via le calculateur métier 12. Cette liaison par modems permet un gain de temps et de coût important car elle peut permettre de résoudre un problème sans nécessiter le déplacement d'un dépanneur. Cette liaison par modems permet également d'écrire des tables de pistolage sur l'ordinateur central, de les tester sur un simulateur puis, une fois les tables de pistolage mises au point, celles-ci peuvent être téléchargées vers le serveur 10.

La figure 3 comme la figure 2 montre une troisième variante de réalisation dans laquelle le superviseur se compose en fait d'un ordinateur 34 et d'un automate programmable industriel 36 séparés. L'automate programmable industriel 36 se charge alors de la commande et du contrôle des capteurs 6 et actionneurs 8 communs à l'installation, et l'ordinateur 34 se charge de la visualisation et de la saisie des commandes. L'ordinateur 34 et l'automate programmable industriel 36 sont tous deux connectés au quatrième réseau informatique 22, relié au réseau informatique de l'utilisateur.

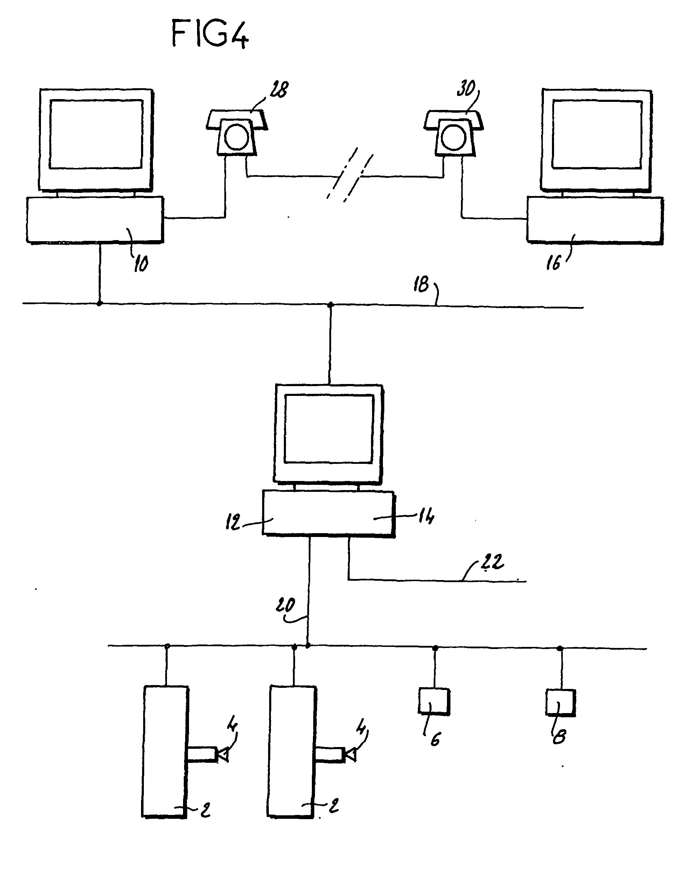

La figure **4** montre une variante de réalisation dans laquelle les fonctionnalités du calculateur métier 12 et du superviseur 14 des figures 1 et 2 sont regroupées au sein d'un même ordinateur.

Les systèmes de commande et de contrôle décrits ci-dessus permettent de réaliser des gains de temps importants lors de la mise en service d'une installation de peinture et lors d'un dépannage. Ils permettent également une plus grande flexibilité car ils facilitent des modifications dans la gamme du constructeur. Il devient plus facile de rajouter une nouvelle teinte de peinture ou un nouveau type de carrosserie dans les tables de pistolage.

L'invention embrasse encore d'autres variantes de réalisation, dans le cadre des revendications annexées.

Ainsi, par exemple, le système de contrôle et de commande selon l'invention ne s'applique pas uniquement à une installation comportant des pulvérisateurs de peinture mais peut également s'appliquer dans le domaine du poudrage et à une installation comportant des machines de dépoussiérage.

La liaison par modems entre un ordinateur central et le système de contrôle et de commande est optionnelle et l'on ne sortirait pas du cadre de l'invention si cette liaison n'était pas prévue.

A la place du calculateur métier décrit et représenté sur la figure 1, il est possible de prévoir plusieurs calculateurs métiers. Il ne s'agit pas obligatoirement d'un ordinateur de type "PC" mais il peut s'agir par exemple aussi d'un calculateur programmable de type automate.

La description ci-dessus prévoit un calculateur métier intégrant les fonctions d'une commande numérique et réalisant une interpolation circulaire des instructions reçues pour commander les pulvérisateurs. Le système selon l'invention n'inclut pas obligatoirement ces fonctions de commande numérique et lorsqu'il les inclut, la commande des pulvérisateurs n'est pas obligatoirement obtenue par interpolation circulaire.

## Revendications

1. Système de commande et de contrôle pour une installation de traitement de surface comportant au moins une machine (2) multi-axes, chaque axe étant équipé de moyens moteurs, munie d'équipements (4) tels que par exemple un pulvérisateur ainsi que de capteurs et actionneurs correspondants, ce système présentant :
des moyens (14 ; 34, 36) permettant de superviser l'installation et comportant au moins un calculateur programmable (14 ; 34) muni de moyens de visualisation et de moyens permettant l'entrée de données,
au moins un calculateur programmable (12) permettant la gestion des axes des machines (2) et de leurs équipements, et
un serveur (10), pouvant être commun à plusieurs installations, permettant la programmation de tables de pistolage,
**caractérisé en ce qu**'un premier réseau informatique (18) relie le serveur (10) au(x) calculateur(s) programmable(s) (12) pour la gestion des machines (2) ainsi qu'aux moyens (14 ; 34) permettant de superviser l'installation, et
en ce qu'un second réseau informatique (20) relie le(s) calculateur(s) programmable(s) (12) pour la gestion des machines (2) aux capteurs et actionneurs des machines (2).

2. Système de commande et de contrôle selon la revendication 1, **caractérisé en ce que** le(s) calcutateur(s) (12) permettant la gestion des axes de machines (2) intègre(nt) une commande numérique permettant de gérer les axes en interpolation, par exemple en interpolation circulaire.

3. Système de commande et de contrôle selon la revendication 2, **caractérisé en ce que** les moyens moteurs associés aux axes des machines (2) comportent des variateurs de vitesse (32) et **en ce qu'**un troisième réseau informatique (24) relie ces variateurs (32) au(x) calculateur(s) programmable(s) (12) permettant la gestion des axes des machines (2).

4. Système de commande et de contrôle selon l'une des revendications 1 à 3, **caractérisé en ce qu'**il comporte également des moyens permettant l'identification de la pièce à traiter, réalisant l'interface avec la cabine et le convoyeur et assurant aussi la gestion des sécurités.

5. Système de commande et de contrôle selon la revendication 4, **caractérisé en ce que** les moyens d'identification, d'interface et de sécurité se présentent sous la forme d'un ensemble de capteurs (6) et d'actionneurs (8) communs à toutes les machines (2) et relié aux moyens (14 ; 36) permettant de superviser l'installation.

6. Système de commande et de contrôle selon l'une des revendications 1 à 5, **caractérisé en ce que** les moyens permettant de superviser l'installation comportent un ordinateur (34) et un automate programmable (36).

7. Système de commande et de contrôle selon les revendications 5 et 6, **caractérisé en ce que** l'ensemble de capteurs (6) et actionneurs (8) communs sont reliés à l'automate programmable (36).

8. Système de commande et de contrôle selon l'une des revendications 1 à 5, **caractérisé en ce que** les moyens permettant de superviser l'installation et le(s) calculateur(s) programmable(s) permettant la gestion des machines (2) sont intégrés dans un même ordinateur (12, 14).

9. Système de commande et de contrôle selon l'une des revendications 1 à 8, **caractérisé en ce que** les moyens (14 ; 34, 36) permettant de superviser l'installation sont connectés au réseau informatique d'une usine par un quatrième réseau informatique (22).

10. Système de commande et de contrôle selon l'une des revendications 1 à 9, **caractérisé en ce que** le serveur (10) dispose de moyens de simulation permettant de visualiser l'application d'une table de pistolage sur une pièce à traiter.

11. Système de commande et de contrôle selon l'une des revendications 1 à 10, **caractérisé en ce que** le serveur (10) est équipé d'un modem (28) lui permettant de communiquer avec un ordinateur (16) placé à distance et équipé lui aussi d'un modem (30).

## Patentansprüche

1. Steuerungs- und Regelungs-System für eine Anlage zur Behandlung von Oberflächen, die mindestens eine Mehrachsenmaschine (2) umfasst, wobei jede Achse mit Antriebsvorrichtungen ausgestattet ist, und die mit Ausrüstungen (4) versehen ist, wie zum Beispiel einem Spritzgerät sowie mit Sensoren und entsprechenden Schaltelementen, wobei dieses System folgendes aufweist:
- Mittel (14 ; 34, 36) für die Überwachung der Anlage, welche mindestens einen programmierbaren Rechner (14 ; 34) beinhalten, der mit Visualisierungseinrichtungen und mit Mitteln zur Eingabe von Daten ausgestattet ist,
- mindestens einen programmierbaren Rechner (12), der die Ansteuerung der Maschinenachsen (2) und ihrer Ausrüstungen ermöglicht,
- einen Server (10), der für mehrere Anlagen genutzt werden kann, der die Einprogrammierung der Spritztabellen ermöglicht,
**dadurch gekennzeichnet, dass** ein erstes Datennetz (18) den Server (10) mit dem programmierbaren Rechner (12) oder den programmierbaren Rechnern (12) für die Ansteuerung der Maschinen (2) sowie mit den Mitteln (14 ; 34) für die Überwachung der Anlage verbindet, und
dadurch, dass ein zweites Datennetz (20) den oder die programmierbaren Rechner (12) für die Ansteuerung der Maschinen (2) mit den Sensoren und Schaltelementen der Maschinen (2) verbindet.

2. Steuerungs- und Regelungs-System nach Anspruch 1, **dadurch gekennzeichnet, dass** der oder die Rechner (12), die der Ansteuerung der Maschinenachsen (2) dienen, eine Numerik-Steuerung umfassen, die es erlaubt, die Achsen in Interpolation, zum Beispiel in Kreisinterpolation anzusteuern.

3. Steuerung- und Regelungs-System nach Anspruch 2, **dadurch gekennzeichnet, dass** die mit den Maschinenachsen (2) verbundenen Antriebsvorrichtungen Geschwindigkeitsregler (32) umfassen, und dadurch, dass ein drittes Datennetz (24) diese Geschwindigkeitsregler (32) mit dem programmierbaren Rechner oder den programmierbaren Rechnern (12) verbindet, die die Ansteuerung der Maschinenachsen (2) ermöglichen.

4. Steuerungs- und Regelungs-System nach einem der Ansprüche 1 bis 3, **dadurch gekennzeichnet, dass** es auch Mittel beinhaltet, die die Identifizierung des zu behandelnden Teils erlauben, und eine Schnittstelle zwischen Kabine und Fördereinrichtung herstellen und auch die Ansteuerung der Sicherheitseinrichtungen gewährleisten.

5. Steuerungs- und Regelungs-System nach Anspruch 4, **dadurch gekennzeichnet, dass** die Identifizierungs-, Schnittstellen- und Sicherheits-Mittel in der Form eines Ensembles von Sensoren (6) und Schaltelementen (8) vorhanden sind, das allen Maschinen (2) gemeinsam ist und mit den Mitteln (14 ; 36) verbunden ist, die die Überwachung der Anlage ermöglichen.

6. Steuerungs- und Regelungs-System nach einem der Ansprüche 1 bis 5, **dadurch gekennzeichnet, dass** die Mittel für die Überwachung der Anlage einen Rechner (34) und einen programmierbaren Automaten (36) beinhalten.

7. Steuerungs- und Regelungs-System nach den Ansprüchen 5 und 6, **dadurch gekennzeichnet, dass** das Ensemble von gemeinsamen Sensoren (6) und Schaltelementen (8) mit dem programmierbaren Automaten (36) verbunden ist.

8. Steuerungs- und Regelungs-System nach einem der Ansprüche 1 bis 5, **dadurch gekennzeichnet, dass** die Mittel für die Überwachung der Anlage sowie der programmierbare oder die programmierbaren Rechner zur Ansteuerung der Maschinen (2) in ein- und denselben Rechner (12, 14) integriert sind.

9. Steuerungs- und Regelungs-System nach einem der Ansprüche 1 bis 8, **dadurch gekennzeichnet, dass** die Mittel (14 ; 34, 36) für die Überwachung der Anlage durch ein viertes Datennetz (22) mit dem Datennetz einer Fabrik gekoppelt sind.

10. Steuerungs- und Regelungs-System nach einem der Ansprüche 1 bis 9, **dadurch gekennzeichnet, dass** der Server (10) über Simulations-Mittel verfügt, die die Anwendung einer Spritztabelle auf ein zu bearbeitendes Teil sichtbar machen können.

11. Steuerungs- und Regelungs-System nach einem der Ansprüche 1 bis 10, **dadurch gekennzeichnet, dass** der Server (10) mit einem Modem (28) ausgestattet ist, das es ihm möglich macht, mit einem Rechner (16) zu kommunizieren, der entfernt aufgestellt und seinerseits mit einem Modem (30) ausgerüstet ist.

## Claims

1. A command and control system for a surface treatment installation comprising at least one multi-axis machine (2), each axis being equipped with drive means, fitted with equipment (4) such as, for example, a sprayer and with corresponding sensors and actuators, this system having:
means (14; 34, 36) allowing the installation to be supervised and comprising at least one programmable computer (14; 34) provided with display means and with means allowing data to be input,
at least one programmable computer (12) for managing the axis of the machines (2) and their equipment, and
a server (10), which may be common to several installations, allowing spraying tables to be programmed,
**characterized in that** a first computer network (18) connects the server (10) to the programmable computer(s) (12) managing the machines (2) and to the means (14; 34) for supervising the installation, and
**in that** a second computer network (20) connects the programmable computer(s) (12) managing the machines (2) to the sensors and actuators of the machines (2).

2. The command and control system as claimed in claim 1, **characterized in that** the computer(s) (12) managing the axes of machines (2) incorporates (incorporate) a numerical control managing the axes with interpolation, for example circular interpolation.

3. The command and control system as claimed in claim 2, **characterized in that** the drive means associated with the axes of the machines (2) comprise speed variators (32) and **in that** a third computer network (24) connects these variators (32) to the programmable computer(s) (12) managing the axes of the machines (2).

4. The command and control system as claimed in one of claims 1 to 3, **characterized in that** it also includes means for identifying the work piece that is to be treated, providing the interface with the booth and the conveyor and also managing safety precautions.

5. The command and control system as claimed in claim 4, **characterized in that** the identification, interface and safety means are in the form of a set of sensors (6) and actuators (8) common to all the machines (2) and connected to the means (14; 36) for supervising the installation.

6. The command and control system as claimed in one of claims 1 to 5, **characterized in that** the means for supervising the installation comprise a computer (34) and a programmable controller (36).

7. The command and control system as claimed in claims 5 and 6, **characterized in that** the set of common sensors (6) and actuators (8) are connected to the programmable controller (36).

8. The command and control system as claimed in one of claims 1 to 5, **characterized in that** the means for supervising the installation and the programmable computer(s) for managing the machines (2) are incorporated into one and the same computer (12, 14).

9. The command and control system as claimed in one of claims 1 to 8, **characterized in that** the means (14; 34, 36) for supervising the installation are connected to the computer network of a factory by a fourth computer network (22).

10. The command and control system as claimed in one of claims 1 to 9, **characterized in that** the server (10) has simulation means allowing the application of a spraying table to a work piece that is to be treated to be displayed.

11. The command and control system as claimed in one of claims 1 to 10, **characterized in that** the server (10) is equipped with a modem (28) allowing it to communicate with a computer (16) situated remotely and also equipped with a modem (30).
